# EUROPEAN PATENT SPECIFICATION

(11) **EP 3 975 212 B1**
(45) Date of publication and mention of the grant of the patent: **26.02.2025**
(21) Application number: 21199754.9
(22) Date of filing: 29.09.2021
(51) Int. Cl.: H01F 41/02, H01F 1/057

(54) **A METHOD FOR PREPARATION OF A SINTERED TYPE NDFEB PERMANENT MAGNET WITH AN ADJUSTED GRAIN BOUNDARY**
VERFAHREN ZUR HERSTELLUNG EINES GESINTERTEN NDFEB-PERMANENTMAGNETEN MIT ANGEPASSTER KORNGRENZE
PROCÉDÉ DE PRÉPARATION D'UN AIMANT PERMANENT NDFEB DE TYPE FRITTÉ AVEC UN JOINT DE GRAIN AJUSTÉ

(30) Priority: 29.09.2020 CN 202011051159
(43) Date of publication of application: 30.03.2022
(73) Proprietor: Yantai Dongxing Magnetic Materials Inc., Yantai City 265500 (CN)
(72) Inventor: Wang, Chuanshen, Yantai-City, 265500 (CN); Yang, Kunkun, Yantai-City, 265500 (CN); Peng, Zhongjie, Yantai-City, 265500 (CN); Ding, Kaihong, Yantai-City, 265500 (CN)
(74) Representative: Gulde & Partner

(56) References cited:
- EP-A1- 3 121 828
- EP-A1- 3 309 801
- EP-A1- 3 309 803
- CN-A- 107 424 703
- US-A1- 2016 203 892

## Description

### BACKGROUND OF THE INVENTION

### 1. Field of the Invention

The invention relates to the technical field of sintered type NdFeB permanent magnets, in particular to a method for preparing sintered type NdFeB permanent magnet with an adjusted grain boundary. The method may increase the coercivity of the sintered type NdFeB permanent magnet.

### 2. Description of the Prior Art

NdFeB sintered permanent magnet called "magnet kings" have been widely used since its inception and has been deeply rooted in modern society. It is widely used in high-tech fields such as electronic information, medical equipment, new energy vehicles, household appliances, robots, etc. With the rapid development of informatization and industrialization, high-performance magnets have become a current research hotspot.

In 2005, Nakamura reported a simple and rapid way to increase coercivity by diffusing heavy rare-earth oxides and fluoride powders on NdFeB permanent magnets, which is called "grain boundary diffusion process". With the development of diffusion technology, two diffusion mechanisms are formed, that is, hardening Nd2Fe14B main phase with heavy rare earth elements to the form a large number of core-shell structures or broadening and diluting grain boundary of ferromagnetic phase.

At present, the diffusion of heavy rare earths is the most significant effect of improving coercivity, but the heavy rare earths is extremely expensive, and the abundance of heavy rare earths is poor. Therefore, more and more researchers are seeking to reduce the amount of heavy rare earths or not use them in NdFeB sintered permanent magnet. In short, the development of magnet containing very low or no heavy rare earths has become a research hotspot.

It is very important to control the grain boundary, that is, the non-magnetic phase in the grain boundary, and effectively cut off the magnetic exchange coupling of the magnet. Such as, patent literatures CN 104078176 A and JP2014209546 A show, in order to improve the coercivity, the segregation of ferromagnetic phases are suppressed in the grain boundary phase through the cooling rate forming the R6T13M phase of the La6Co11Ga13 type crystal structure. Patent literature CN 108878090 reveals the high performance non-heavy rare earth NdFeB sintered permanent magnet has clear grain boundary through controlling the content of various elements and low-temperature aging. Patent literature CN 105206417 A realizes the gas phase isolation of magnetic powder particles and crystal grains through the heated gasification of sulfur to make the low melting point alloy rare earth-copper aluminum. The alloy is completely separated from the main phase to obtain high coercivity. Patent literature CN 102290181 A realizes a low-cost high-performance neodymium iron boron magnet without heavy rare earth or very low heavy rare earth. However, the above-mentioned magnets do not give effective method of adjustable grain boundary. EP 3 121 828 A1 and US 2016/203892 A1 disclose further manufacturing processes for NdFeB magnets including a diffusion treatment step.

### SUMMARY OF THE INVENTION

The present invention provides a preparation method for a sintered type NdFeB permanent magnet as defined in claim 1. The method includes the steps of:
(1) Covering a NdFeB magnet with a diffusion source to form a NdFeB magnet intermediate, wherein the NdFeB magnet intermediate is a non-heavy rare earth type NdFeB magnet intermediate or a heavy rare earth type NdFeB magnet intermediate,
   wherein the chemical composition of the non-heavy rare earth NdFeB magnet intermediate is [R1ₓR2₁₋ₓ]ₐM_{b}B_{c}Fe_{100-a-b-c} with
   0.94≤x≤1, 32≤a≤37, 1.5≤b≤7, and 0.9≤c≤1.2,
   R1 being one or more of Nd, Pr, and Ce,
   R2 being one or two of La and Sm, and
   M being one or more of Al, Cu, Ga, Ti, Co, Mg, Zn, and Sn; and
   wherein the chemical composition of the heavy rare earth type NdFeB magnet intermediate is [R1ₓR3_{y}R2_{1-x-y}]ₐM_{b}B_{c}Fe_{100-a-b-c} with
   32.5≤a≤38, 0.8≤x≤0.98, 0.003≤y≤0.3, 1.5≤b≤7, and 0.9≤c≤1.2,
   R1 being one or more of Nd, Pr and Ce,
   R2 being one or two of La and Sm,
   R3 being one or more of Tb, Dy and Ho, and
   M being one or more of Al, Cu, Ga, Ti, Co, Mg, Zn, and Sn, and
   wherein the diffusion source refers to an alloy including two or more of the alloying elements Nd, Pr, Ce, La, Ho, Tb, Dy, Ga, Al, Cu, and Mg;
(2) Putting the NdFeB magnet intermediate into a furnace and performing a diffusion treatment and subsequently an aging treatment, wherein the aging treatment is divided into a heating step and a cooling step and
   wherein the cooling step is carried out by means of argon gas positive pressure circulation cooling, a pressure of the argon gas used for argon gas positive pressure circulation cooling is in the range of 1 bar to 5 bar, the temperature for diffusion treatment of the NdFeB magnet is in the range of 850°C to 920°C for 6h to 20h, and the temperature for aging treatment is in the range of 420°C to 680°C for 3h to 10h such that NdFeB magnets with a thickness of grain boundaries in the range of 10nm to 1µm are formed, a structure of the grain boundaries includes a main phase, grain boundary (a), grain boundary (b), and grain boundary (c),
   wherein grain boundary (a) meets the following conditions: R≥55wt% or 35wt%≤R≤40wt%, 10wt%≤M≤28wt%, where 3:1≤Nd/(Pr or Ce or La)≤2:1, and (Cu+Al+Ga)/M≥0.8;
   grain boundary (b) meets the following conditions: 40wt%≤R≤55wt%, 10wt%≤M≤20 wt%, 9:10≤Nd/(Pr or Ce or La)≤2, and (Cu+Co+Al)/M≥ 0.9; and
   grain boundary (c) meets the following conditions: 25wt%≤R≤50wt% or R≥60%, 0≤M≤10wt%,
   where R in the grain boundaries (a) to (c) refers to the total amount of rare earths, and M refers to the total amount of Al, Cu, Ga, Ti, Co, Mg, Zn, Nb, Mo, and Sn.

Further embodiments of the present invention could be learned from the dependent claims and the following description.

### BRIEF DESCRIPTION OF THE FIGURES

Figure 1 schematically shows the NdFeB magnet intermediate.
Figure 2 shows the grain boundary structure of the NdFeB magnet before Grain Boundary Diffusion (GBD).
Figure 3 shows the grain boundary structure of the NdFeB magnet of Example 2 (SEM images of the microstructure of Nd-Fe-B permanent magnets after diffusion using backscattered electron (BSE) contrast).
Figure 4 shows the grain boundary structure of the NdFeB magnet of Example 3.
Figure 5 shows the grain boundary structure of the NdFeB magnet of Example 7.
Figure 6 shows the grain boundary structure of the NdFeB magnet of Example 12.
Figure 7 shows the grain boundary structure of the NdFeB magnet of Example 13.

### DETAILED DESCRIPTION OF THE INVENTION

The principles and features of the invention are described below, and the examples are only intended to be illustrated and not to limit the scope of the invention as defined by the present claims.

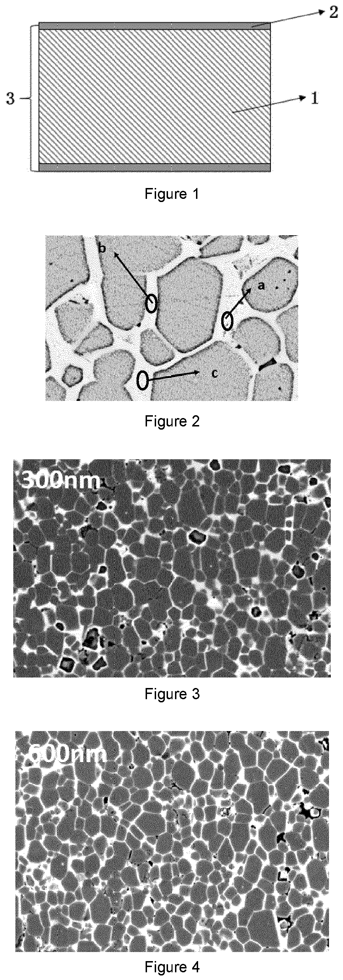

Figure 1 schematically shows the NdFeB magnet intermediate 3, which is composed of a NdFeB magnet 1 and a covering of a diffusion source 2.

The present invention proposes a method for preparing sintered type NdFeB permanent magnet with adjustable grain boundaries. A NdFeB sintered permanent magnet is prepared through the synergistic effect between the elements of the magnet composition and the diffusion source, and in particular by controlling the composition ratio of the magnet composition and the diffusion source. Furthermore, clear grain boundary can improve the coercivity of NdFeB sintered permanent magnet by controlling the content of C, O, and N in the atmosphere and by argon air cooling.

In order to achieve the aforementioned purpose of the invention, the method for preparing sintered type NdFeB permanent magnet includes the following steps:
The NdFeB magnet is covered with a diffusion source to form a NdFeB magnet intermediate.

The NdFeB magnet intermediate is put into a furnace and a diffusion treatment and subsequently an aging treatment is performed. The aging treatment is divided into a heating step and a cooling step. The cooling step is carried out by means of argon gas positive pressure circulation cooling such that NdFeB magnets with a thickness of grain boundaries in the range of 10nm to 1µm, preferably 30nm to 800nm, are formed. A structure of the grain boundaries includes a main phase, grain boundary (a), grain boundary (b), and grain boundary (c).
Grain boundary (a) meets the following conditions: R≥55wt% or 35wt%≤R≤40wt%, 10wt%≤M≤28wt%, where 3:1≤Nd/(Pr or Ce or La)≤2:1, and (Cu+Al+Ga)/M≥0.8;
grain boundary (b) meets the following conditions: 40wt%≤R≤55wt%, 10wt%≤M≤20wt%, 9:10≤Nd/(Pr or Ce or La)≤2, and (Cu+Co+Al)/M≥ 0.9; and
grain boundary (c) meets the following conditions: 25wt%≤R≤50wt% or R≥60%, 0≤M≤10wt%,
where R in the grain boundaries (a) to (c) refers to the total amount of rare earths, and M refers to the total amount of Al, Cu, Ga, Ti, Co, Mg, Zn, Nb, Mo, and Sn.

The grain boundary thicknesses and their compositions are measured by Zeiss EVOMA10 (SEM) Scanning Electron Microscope Measurement and EDS (Energy Dispersive Spectrometer) respectively.

Grain boundary (a) is the trigonometric position 1, which is in junction of the three main phases. Grain boundary (b) is the two grain boundary phase position. Grain boundary (c) is the trigonometric position 2, which is in junction of the three main phases.

According to the present method, the aging treatment is divided into a heating process and a cooling process. Argon gas is used for the cooling process. The pressure and temperature of argon gas may determine the cooling rate of magnets. A temperature of argon gas may be 10°C to 20°C, preferably 15°C. Furthermore, a pressure of the argon gas used for argon gas positive pressure circulation cooling is in the range of 1 bar to 5 bar.

The NdFeB magnet is cooled down by the argon gas, which may pass through a (copper) tube-fin type annular exchanger. Thereby, a uniform cooling rate is achieved. The pressure of the circulated argon gas is an important parameter of the process as demonstrated in below Examples 1 to 13. The composition of the NdFeB magnet intermediate and the argon pressure together determine the grain boundary thickness. In other words,

The way of cooling using the tube-fin type annular exchanger may include vertical cooling or parallel cooling or vertical and parallel alternating cooling.

Furthermore, the temperature for diffusion treatment of the NdFeB magnet is in the range of 850°C to 920°C for 6h to 20h. The temperature for aging treatment is in the range of 420°C to 680°C for 3h to 10h.

Furthermore, the method of covering the diffusion source on the NdFeB magnet may be any one of magnetron sputtering coating, vapor deposition coating, slurry coating, and sticking powder coating.

The NdFeB magnet intermediate refers to non-heavy rare earth type intermediate or heavy rare earth type intermediate.

The chemical composition of the non-heavy rare earth NdFeB magnet intermediate is [R1ₓR2₁₋ₓ]ₐM_{b}B_{c}Fe_{100-a-b-c}
with 0.94≤x≤1, 32≤a≤37, 1.5≤b≤7, and 0.9≤c≤1.2,
R1 being one or more of Nd, Pr, and Ce,
R2 being one or two of La and Sm, and
M being one or more of Al, Cu, Ga, Ti, Co, Mg, Zn, and Sn.

According to further embodiments, the chemical composition of the non-heavy rare earth NdFeB magnet intermediate fulfils one or more of the following conditions:
- When R1 includes Nd and Pr, their weight ratio is 0.03≤Pr/Nd≤0.6.
- When R2 includes La and Sm, their weight ratio is 0.5≤La/Sm≤2.
- When M includes Cu and Al, their weight ratio is 0<Cu/Al<6.5.
- When M includes Cu and Ga, their weight ratio is 0≤Cu/Ga≤5.
- When M includes Mg and Al, their weight ratio is 0≤Mg/Al≤6.

The chemical composition of the heavy rare earth type NdFeB magnet intermediate is [R1ₓR3_{y}R2_{1-x-y}]ₐM_{b}B_{c}Fe_{100-a-b-c}
with 32.5≤a≤38 (preferably 32≤a≤36), 0.8≤x≤0.98, 0.003≤y≤0.3, 1.5≤b≤7, and 0.9≤c≤1.2,
R1 being one or more of Nd, Pr and Ce,
R2 being one or two of La and Sm,
R3 being one or more of Tb, Dy and Ho, and
M being one or more of Al, Cu, Ga, Ti, Co, Mg, Zn, and Sn.

According to further embodiments, the chemical composition of the heavy rare earth type NdFeB magnet intermediate fulfils one or more of the following conditions:
- When R1 includes Nd and Pr, and 0.03≤Pr/Nd≤0.4.
- When R2 includes La and Sm, their weight ratio is 0.5≤La/Sm≤2.
- When M includes Cu and Al, their weight ratio is 0≤Cu/Al≤6.5.
- When M includes Cu and Ga, their weight ratio is 0≤Cu/Ga≤5.
- When M includes Mg and Al, their weight ratio is 0≤Mg/Al≤6.

The content of B may preferably be 0.92≤c≤1.0.

Furthermore, the non-heavy rare earth NdFeB magnet coercivity can attain 1990 kA/m or more after high temperature and aging treatment.

Furthermore, the heavy rare earth type [R1ₓR3_{y}R2_{1-xy}]ₐM_{b}B_{c}Fe_{100-a-b-c}, wherein 32.5≤a≤38, 0.8≤x≤0.98, 0.003≤y≤0.3, 1.5≤b≤7, 0.9≤c≤1.2, wherein R1 refers to one or more of Nd, Pr and Ce, R2 refers to one or two of La and Sm, R3 refers to one or more of Tb, Dy and Ho, and M refers to multiple combinations of Al, Cu, Ga, Ti, Co, Mg, Zn, and Sn, the optimal range is 33≤a≤37, such as 34wt%, 35wt%, and wt% is the weight percentage of the element in the NdFeB magnet intermediate;
and/or the heavy rare earth is added in the smelting process, and the optimal range is 0.05-0.12;
and/or when R1 includes Nd and Pr, and 0.03≤Pr/Nd≤0.4;
and/or, the values of R2 and M in the heavy rare earth type NdFeB magnet intermediate are equivalent to the values of R2 and M in the non-heavy rare earth NdFeB magnet.

Furthermore, heavy rare earth NdFeB magnet coercivity can attain 2308.4 kA/m or more after high temperature and aging treatment.

Compared with the prior art, the present invention has the following advantages:
NdFeB magnet intermediate of specific composition is formed by a matching combination between the magnet composition and the diffusion source composition. The grain boundary thickness can be controlled effectively by the diffusion temperature, the aging temperature, and the argon gas positive pressure cooling. Mass production of products can be achieved by simple experimental conditions.

The non-heavy rare earth NdFeB magnet coercivity can attain 1990 kA/m or more. For example, a heavy rare earth NdFeB magnet including 1.13 wt% of Tb showed a coercivity of 2308.4 kA/m.

The production cost is greatly reduced, and it is suitable for industrial production.

Higher coercivity of NdFeB magnet with low or no heavy rare earth content can be achieved.

The method has not harsh requirements for C, O, and N and other atmosphere elements, which is easy for mass production.

The invention proposes that the thickness of grain boundary can be accurately controlled to achieve specific performance of the magnet by the matching combination between the magnet composition and the diffusion source composition and experimental conditions.

The NdFeB magnet intermediates are formed through coating NdFeB magnets with a diffusion source. The examples are as followings.

### Example 1

1) Prepare a NdFeB magnet intermediate, which meets the requirement that the total amount of Pr, Nd, and Ce is 34.67wt%, the ratio of Pr/Nd is 0.16, the content of Tb is 1.13wt%, and the total amount of Al, Cu, and Ga is 2.22wt %, Cu/Al is 1.26, Cu/Ga is 6, the total amount of Co, Ti, Zn, and Sn is 1.42wt%, and the B content is 1.04wt%. The NdFeB magnet intermediate is diffused at a high temperature of 900°C for 10 hours, the aging temperature is 480°C for 8 hours. The pressure of argon gas, which is circulated for cooling, is 1500 mbar.
2) The properties of the NdFeB magnet have been determined: the intrinsic coercivity (i.e. Hcj) is 2308.4 kA/m, the remanence (i.e. Br) is 1.25T, and the thickness of grain boundary is 800 nm.

### Example 2

1) Prepare a NdFeB magnet intermediate, which meets the requirement that the total amount of Pr, Nd, and Ce is 32.79 wt%, the ratio of Pr/Nd is 0.05, the content of Dy is 0.98 wt%, and the total amount of Al, Cu, and Ga is 1.62 wt %, Cu/Al is 0.53, Cu/Ga is 2.5, the total amount of Co, Ti, Zn, and Sn is 1.47wt%, and the B content is 1.08wt%. The NdFeB magnet intermediate is diffused at a high temperature of 940°C for 8 hours, the aging temperature is 500°C for 6 hours. The pressure of argon gas, which is circulated for cooling, is 1000 mbar.
2) The properties of the NdFeB magnet are: the intrinsic coercivity (i.e. Hcj) is 2149.2 kA/m, the remanence (i.e. Br) is 1.32T, and the thickness of grain boundary is about 300 nm, as shown in Figure 3.

### Example 3

1) Prepare a NdFeB magnet intermediate, which meets the requirement that the total amount of Pr, Nd, and Ce is 37.75 wt%, the ratio of Pr/Nd is 0.53, and the total amount of Al, Cu, Ga, and Mg is 2.35 wt %, Cu/Al is 0.16, Cu/Ga is 0.75, Mg/Al is 1.11, the total amount of Co, Ti, Zn, and Sn is 1.5 wt%, and the B content is 1.1wt%. The NdFeB magnet intermediate is diffused at a high temperature of 850°C for 20 hours, the aging temperature is 460°C for 10 hours. The pressure of argon gas, which is circulated for cooling, is 3000 mbar.
2) The properties of the NdFeB magnet are: the intrinsic coercivity (i.e. Hcj) is 1910.4 kA/m, the remanence (i.e. Br) is 1.28T, and the thickness of grain boundary is 600 nm, as shown in Figure 4.

### Example 4

1) Prepare a NdFeB magnet intermediate, which meets the requirement that the total amount of Pr, Nd, and Ce is 33.15 wt%, the ratio of Pr/Nd is 0.36, and the total amount of Al, Cu, and Ga is 1.41 wt %, Cu/Al is 0.29, Cu/Ga is 1.36, the total amount of Co, Ti, Zn, and Sn is 1.49 wt%, and the B content is 1.09wt%. The NdFeB magnet intermediate is diffused at a high temperature of 960°C for 6 hours, the aging temperature is 520°C for 9 hours. The pressure of argon gas, which is circulated for cooling, is 500 mbar.
2) The properties of the NdFeB magnet are: the intrinsic coercivity (i.e. Hcj) is 1751.2 kA/m, the remanence (i.e. Br) is 1.33T, and the thickness of grain boundary is 50 nm.

### Example 5

1) Prepare a NdFeB magnet intermediate, which meets the requirement that the total amount of Pr, Nd, and Ce is 37.75 wt%, the ratio of Pr/Nd is 0.15 and the total amount of Al, Cu, Ga, and Mg is 3.3 wt %, Cu/Al is 0.04, Cu/Ga is 0.4, the ratio of Mg/Al is 0.55. The total amount of Co, Ti, Zn, and Sn is 1.5 wt%, and the B content is 1.1 wt%. The NdFeB magnet intermediate is diffused at a high temperature of 900°C for 12 hours, the aging temperature is 550°C for 8 hours. The pressure of argon gas, which is circulated for cooling, is 2500 mbar.
2) The properties of the NdFeB magnet are: the intrinsic coercivity (i.e. Hcj) is 1990 kA/m, the remanence (i.e. Br) is 1.26 T, and the thickness of grain boundary is 700 nm.

### Example 6

1) Prepare a NdFeB magnet intermediate, which meets the requirement that the total amount of Pr, Nd, and Ce is 33.77 wt%, the ratio of Pr/Nd is 0.05, the total amount of Al, Cu, and Ga is 1.55 wt %, Cu/Al is 0.45, Cu/Ga is 2.15, the total amount of Co, Ti, Zn, and Sn is 1.47 wt%, and the B content is 1.08 wt%. The NdFeB magnet intermediate is diffused at a high temperature of 910°C for 15 hours, the aging temperature is 600°C for 11 hours. The pressure of argon gas, which is circulated for cooling, is 3000 mbar.
2) The properties of the NdFeB magnet are: the intrinsic coercivity (i.e. Hcj) is 1950.2 kA/m, the remanence (i.e. Br) is 1.3 T, and the thickness of grain boundary is 290 nm.

### Example 7

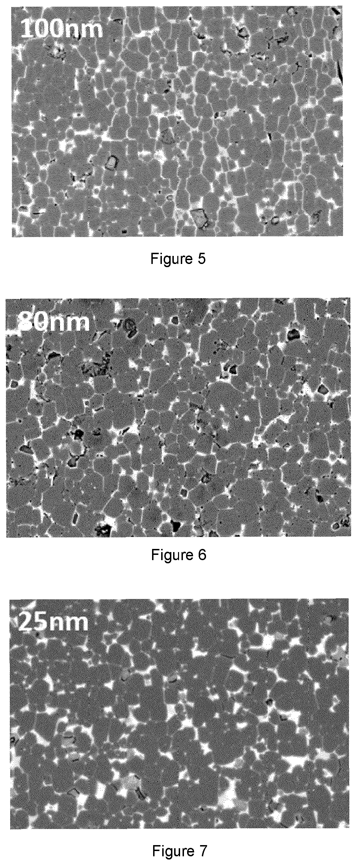

1) Prepare a NdFeB magnet intermediate, which meets the requirement that the total amount of Pr, Nd, and Ce is 33.77 wt%, the ratio of Pr/Nd is 0.05, the total amount of Al, Cu, and Ga is 1.32 wt %, Cu/Al is 1.11, Cu/Ga is 1.25, the total amount of Co, Ti, Zn, and Sn is 1.47 wt%, and the B content is 1.08 wt%. The NdFeB magnet intermediate is diffused at a high temperature of 880°C for 10 hours, the aging temperature is 490°C for 9 hours. The pressure of argon gas, which is circulated for cooling, is 1300 mbar.
2) The properties of the NdFeB magnet are: the intrinsic coercivity (i.e. Hcj) is 1870.6 kA/m, the remanence (i.e. Br) is 1.32 T, and the thickness of grain boundary is 100 nm, as shown in Figure 5.

### Example 8

1) Prepare a NdFeB magnet intermediate, which meets the requirement that the total amount of Pr, Nd, and Ce is 37.75 wt%, the ratio of Pr/Nd is 0.15, the total amount of Al, Cu, Ga, and Mg is 2.1 wt %, Cu/Al is 0.07, Cu/Ga is 0.25, Mg/Al is 1.5. The total amount of Co, Ti, Zn, and Sn is 1.5 wt%, and the B content is 1.1 wt%. The NdFeB magnet intermediate is diffused at a high temperature of 920°C for 11 hours, the aging temperature is 420°C for 10 hours. The pressure of argon gas, which is circulated for cooling, is 3500 mbar.
2) The properties of the NdFeB magnet are: the intrinsic coercivity (i.e. Hcj) is 1910.4 kA/m, the remanence (i.e. Br) is 1.33 T, and the thickness of grain boundary is 150 nm.

### Example 9

1) Prepare a NdFeB magnet intermediate, which meets the requirement that the total amount of Pr, Nd, and Ce is 33 wt%, the ratio of Pr/Nd is 0.03, the total amount of Al, Cu, and Ga is 1.36 wt %, Cu/Al is 0.23, Cu/Ga is 1.1. The total amount of Co, Ti, Zn, and Sn is 1.54 wt%, and the B content is 1.1 wt%. The NdFeB magnet intermediate is diffused at a high temperature of 860°C for 9 hours, the aging temperature is 680°C for 3 hours. The pressure of argon gas, which is circulated for cooling, is 800 mbar.
2) The properties of the NdFeB magnet are: the intrinsic coercivity (i.e. Hcj) is 1751.2 kA/m, the remanence (i.e. Br) is 1.36 T, and the thickness of grain boundary is 20 nm.

### Example 10

1) Prepare a NdFeB magnet intermediate, which meets the requirement that the total amount of Pr, Nd, and Ce is 34 wt%, the ratio of Pr/Nd is 0.48, the total amount of La and Sm is 0.6 wt%, the ratio of La/Sm is 0.8 the total amount of Al, Cu, Ga, and Mg is 1.4 wt %, Cu/Al is 1, Cu/Ga is 0.67, and Mg/Al is 3.5. The total amount of Co, Ti, Zn, and Sn is 1.6 wt%, and the B content is 1.1 wt%. The NdFeB magnet intermediate is diffused at a high temperature of 930°C for 9 hours, the aging temperature is 660°C for 4 hours. The pressure of argon gas, which is circulated for cooling, is 1700 mbar.
2) The properties of the NdFeB magnet are: the intrinsic coercivity (i.e. Hcj) is 1830.8 kA/m, the remanence (i.e. Br) is 1.35 T, and the thickness of grain boundary is 120 nm.

### Example 11

1) Prepare a NdFeB magnet intermediate, which meets the requirement that the total amount of Pr, Nd, and Ce is 35.95 wt%, the ratio of Pr/Nd is 0.55, the total amount of La and Sm is 0.54 wt%, the ratio of La/Sm is 0.93 the total amount of Al, Cu, Ga, and Mg is 1.9 wt %, Cu/Al is 1.2, Cu/Ga is 0.67, and Mg/Al is 4.2. The total amount of Co, Ti, Zn, and Sn is 1.08 wt%, and the B content is 0.92 wt%. The NdFeB magnet intermediate is diffused at a high temperature of 930°C for 12 hours, the aging temperature is 510°C for 5 hours. The pressure of argon gas, which is circulated for cooling, is 5000 mbar.
2) The properties of the NdFeB magnet are: the intrinsic coercivity (i.e. Hcj) is 1950.2 kA/m, the remanence (i.e. Br) is 1.31 T, and the thickness of grain boundary is 210 nm.

### Example 12

1) Prepare a NdFeB magnet intermediate, which meets the requirement that the total amount of Pr, Nd, and Ce is 31.51 wt%, the ratio of Pr/Nd is 0.37, the total amount of La and Sm is 0.53 wt%, the ratio of La/Sm is 0.5 the total amount of Al, Cu, and Ga is 1.01 wt %, Cu/Al is 1.9, and Cu/Ga is 1.25. The total amount of Co, Ti, Zn, and Sn is 1.07 wt%, and the B content is 1.09 wt%. The NdFeB magnet intermediate is diffused at a high temperature of 850°C for 10 hours, the aging temperature is 570°C for 6 hours. The pressure of argon gas, which is circulated for cooling, is 1800 mbar.
2) The properties of the NdFeB magnet are: the intrinsic coercivity (i.e. Hcj) is 1830.8 kA/m, the remanence (i.e. Br) is 1.33 T, and the thickness of grain boundary is 80 nm, as shown in Figure 6.

### Example 13

1) Prepare a NdFeB magnet intermediate, which meets the requirement that the total amount of Pr, Nd, and Ce is 31.21 wt%, the ratio of Pr/Nd is 0.35, the total amount of La and Sm is 0.9 wt%, the ratio of La/Sm is 2 the total amount of Al, Cu, and Ga is 1.02 wt %, Cu/Al is 1.48, and Cu/Ga is 0.9. The total amount of Co, Ti, Zn, and Sn is 1.08 wt%, and the B content is 1.1 wt%. The NdFeB magnet intermediate is diffused at a high temperature of 880°C for 6 hours, the aging temperature is 440°C for 3 hours. The pressure of argon gas, which is circulated for cooling, is 2800 mbar.
2) The properties of the NdFeB magnet are: the intrinsic coercivity (i.e. Hcj) is 1671.6 kA/m, the remanence (i.e. Br) is 1.35 T, and the thickness of grain boundary is 25 nm, as shown in Figure 7.

### Example 14

1) Prepare a NdFeB magnet intermediate, which meets the requirement that the total amount of Pr, Nd, and Ce is 31.72 wt%, the ratio of Pr/Nd is 0.41, the total amount of La and Sm is 1.1 wt%, the ratio of La/Sm is 0.93 the total amount of Al, Cu, and Ga is 1.03 wt %, Cu/Al is 2.75, and Cu/Ga is 1.83. The total amount of Co, Ti, Zn, and Sn is 1.06 wt%, and the B content is 1.08 wt%. The NdFeB magnet intermediate is diffused at a high temperature of 920°C for 13 hours, the aging temperature is 460°C for 9 hours. The pressure of argon gas, which is circulated for cooling, is 2500 mbar.
2) The properties of the NdFeB magnet are: the intrinsic coercivity (i.e. Hcj) is 1830.8 kA/m, the remanence (i.e. Br) is 1.34 T, and the thickness of grain boundary is 100 nm.

### Example 15

1) Prepare a NdFeB magnet intermediate, which meets the requirement that the total amount of Pr, Nd, and Ce is 30.91 wt%, the ratio of Pr/Nd is 0.35, the total amount of La and Sm is 2 wt%, the ratio of La/Sm is 1 the total amount of Al, Cu, and Ga is 0.77 wt %, Cu/Al is 1.35, and Cu/Ga is 0.9. The total amount of Co, Ti, Zn, and Sn is 1.08 wt%, and the B content is 1.1 wt%. The NdFeB magnet intermediate is diffused at a high temperature of 850°C for 9 hours, the aging temperature is 620°C for 5 hours. The pressure of argon gas, which is circulated for cooling, is 5500 mbar.
2) The properties of the NdFeB magnet are: the intrinsic coercivity (i.e. Hcj) is 1631.8 kA/m, the remanence (i.e. Br) is 1.38 T, and the thickness of grain boundary is 20 nm.

The NdFeB magnet 1 and the diffusion source 2 form the NdFeB magnet intermediate 3, as schematically illustrated in Figure 1. Diffusion temperature, diffusion time, aging temperature, and aging time and the cooling Argon pressure with the compositon of NdFeB magnet intermediate represent suitable parameters for controlling the grain boundary thickness and thereby an increase of the performance of the NdFeB magnet could be achieved. The NdFeB magnet intermediate compositions are shown in Table 1. Treatment process, rain boundary thickness and performance are displayed in Table 2. The coercivity of non-heavy rare earths can be higher than 1990 kA/m, and the coercivity of magnets containing heavy rare earths after treatment can be higher than 2308.4 kA/m.

**Table 1**

| Example | Pr, Nd, Ce | Pr/Nd | La, Sm | La/Sm | Tb, Dy, Ho | Al, Cu, Ga, Mg | Cu/Al | Cu/Ga | Mg/Al | Co, Ti, Zn, Sn | B | Fe |
|---|---|---|---|---|---|---|---|---|---|---|---|---|
| 1 | 34.67 | 0.16 | / | / | 1.13 | 2.22 | 1.26 | 6.00 | 0.00 | 1.42 | 1.04 | Bal. |
| 2 | 32.79 | 0.05 | / | / | 0.98 | 1.62 | 0.53 | 2.50 | 0.00 | 1.47 | 1.08 | Bal. |
| 3 | 37.75 | 0.53 | / | / | / | 2.35 | 0.16 | 0.75 | 1.11 | 1.50 | 1.10 | Bal. |
| 4 | 33.15 | 0.36 | / | / | / | 1.41 | 0.29 | 1.36 | 0.00 | 1.49 | 1.09 | Bal. |
| 5 | 37.75 | 0.15 | / | / | / | 3.30 | 0.04 | 0.40 | 0.55 | 1.50 | 1.10 | Bal. |
| 6 | 33.77 | 0.05 | / | / | / | 1.55 | 0.45 | 2.15 | 0.00 | 1.47 | 1.08 | Bal. |
| 7 | 33.77 | 0.05 | / | / | / | 1.32 | 1.11 | 1. 25 | 0.00 | 1.47 | 1.08 | Bal. |
| 8 | 37.75 | 0.15 | / | / | / | 2.10 | 0.07 | 0.25 | 1. 50 | 1.50 | 1.10 | Bal. |
| 9 | 33.00 | 0.03 | / | / | / | 1.36 | 0.23 | 1.10 | 0.00 | 1.54 | 1.10 | Bal. |
| 10 | 34.00 | 0.48 | 0.6 | 0.80 | / | 1.40 | 1.00 | 0.67 | 3.5 | 1.6 | 1.1 | Bal. |
| 11 | 35.95 | 0.55 | 0.54 | 0.93 | / | 1.90 | 1.20 | 0.67 | 4.20 | 1.08 | 0.92 | Bal. |
| 12 | 31.51 | 0.37 | 0.53 | 0.50 | / | 1.01 | 1.90 | 1. 25 | 0.00 | 1.07 | 1.09 | Bal. |
| 13 | 31.21 | 0.35 | 0.90 | 2.00 | / | 1.02 | 1.48 | 0.90 | 0.00 | 1.08 | 1.10 | Bal. |
| 14 | 31.72 | 0.41 | 1.10 | 0.93 | / | 1. 03 | 2. 75 | 1.83 | 0.00 | 1.06 | 1.08 | Bal. |
| 15 | 30.91 | 0.35 | 2.00 | 1.00 | / | 0.77 | 1.35 | 0.90 | 0.00 | 1.08 | 1.10 | Bal. |

**Table 2**

| Example | Cooling pressure (mbar) | Diffusion Temp °C | Diffusion hours | Aging Temp °C | Aging hours | Thickness of G. B. (mm) | Hcj(kA/m) | Br (T) |
|---|---|---|---|---|---|---|---|---|
| 1 | 1500 | 900 | 10 | 480 | 8 | 800 | 2308.4 | 1. 25 |
| 2 | 1000 | 940 | 8 | 500 | 6 | 300 | 2149.2 | 1.32 |
| 3 | 3000 | 850 | 20 | 460 | 10 | 600 | 1910.4 | 1. 28 |
| 4 | 500 | 960 | 6 | 520 | 9 | 50 | 1751.2 | 1. 33 |
| 5 | 2500 | 900 | 12 | 550 | 8 | 700 | 1990 | 1. 26 |
| 6 | 3000 | 910 | 15 | 600 | 11 | 290 | 1950.2 | 1.3 |
| 7 | 1300 | 880 | 10 | 490 | 9 | 100 | 1870.6 | 1.32 |
| 8 | 3500 | 920 | 11 | 420 | 10 | 150 | 1910.4 | 1.33 |
| 9 | 800 | 860 | 9 | 680 | 3 | 20 | 1751.2 | 1.36 |
| 10 | 1700 | 930 | 9 | 660 | 4 | 120 | 1830.8 | 1.35 |
| 11 | 5000 | 930 | 12 | 510 | 5 | 210 | 1950.2 | 1.31 |
| 12 | 1800 | 850 | 10 | 570 | 6 | 80 | 1830.8 | 1.33 |
| 13 | 2800 | 880 | 6 | 440 | 3 | 25 | 1671.6 | 1.35 |
| 14 | 2500 | 920 | 13 | 460 | 9 | 100 | 1830.8 | 1.34 |
| 15 | 5500 | 850 | 9 | 620 | 5 | 20 | 1631.8 | 1.38 |

From the above embodiments, it can be seen that the composition of the NdFeB magnet intermediate and the experimental conditions can effectively form different thicknesses of grain boundaries, including non-heavy rare earth NdFeB magnets and heavy rare earth NdFeB magnets.

It is mainly manifested in the following aspects:
1) Different thickness of grain boundary can be controlled effectively, see for example Examples 2, 3, 7, 12, and 13 whose thicknesses of the grain boundary are 300, 600, 100, 80, and 25 nm, respectively.
2) The process conditions of diffusion temperatures, aging temperatures and Ar gas cooling pressure can control the thickness of grain boundary.
3) The method has not harsh requirements for C, O, and N and other atmosphere gases, which makes the industrial process for preparing of NdFeB magnets more easily. Thereby, the overall production costs of NdFeB magnets can be reduced.
4) The NdFeB magnets show distinguishable grain boundary structures of different thicknesses, and have typical boundary characteristics different from conventional magnets.

## Claims

1. A preparation method for a sintered type NdFeB permanent magnet, the method including the steps of:
(1) Covering a NdFeB magnet with a diffusion source to form a NdFeB magnet intermediate, , wherein the NdFeB magnet intermediate is a non-heavy rare earth type NdFeB magnet intermediate or a heavy rare earth type NdFeB magnet intermediate,
wherein the chemical composition of the non-heavy rare earth NdFeB magnet intermediate is [R1ₓR2₁₋ₓ]ₐM_{b}B_{c}Fe_{100-a-b-c} with
0.94≤x≤1, 32≤a≤37, 1.5≤b≤7, and 0.9≤c≤1.2,
R1 being one or more of Nd, Pr, and Ce,
R2 being one or two of La and Sm, and
M being one or more of Al, Cu, Ga, Ti, Co, Mg, Zn, and Sn; and
wherein the chemical composition of the heavy rare earth type NdFeB magnet intermediate is [R1ₓR3_{y}R2_{1-x-y}]ₐM_{b}B_{c}Fe_{100-a-b-c} with
32.5≤a≤38, 0.8≤x≤0.98, 0.003≤y≤0.3, 1.5≤b≤7, and 0.9≤c≤1.2,
R1 being one or more of Nd, Pr and Ce,
R2 being one or two of La and Sm,
R3 being one or more of Tb, Dy and Ho, and
M being one or more of Al, Cu, Ga, Ti, Co, Mg, Zn, and Sn, and
wherein the diffusion source refers to an alloy including two or more of the alloying elements Nd, Pr, Ce, La, Ho, Tb, Dy, Ga, Al, Cu, and Mg;
(2) Putting the NdFeB magnet intermediate into a furnace and performing a diffusion treatment and subsequently an aging treatment, wherein the aging treatment is divided into a heating step and a cooling step, and
wherein the cooling step is carried out by means of argon gas positive pressure circulation cooling,
a pressure of the argon gas used for argon gas positive pressure circulation cooling is in the range of 1 bar to 5 bar,
the temperature for diffusion treatment of the NdFeB magnet is in the range of 850°C to 920°C for 6h to 20h, and
the temperature for aging treatment is in the range of 420°C to 680°C for 3h to 10h such that NdFeB magnets with a thickness of grain boundaries in the range of 10nm to 1µm are formed, and a structure of the grain boundaries includes a main phase, grain boundary (a), grain boundary (b), and grain boundary (c),
wherein grain boundary (a) meets the following conditions: R≥55wt% or 35wt%≤R≤40wt%, 10wt%≤M≤28wt%, where 3:1≤Nd/(Pr or Ce or La)≤2:1, and (Cu+Al+Ga)/M≥0.8;
grain boundary (b) meets the following conditions: 40wt%≤R≤55wt%, 10wt%≤M≤20wt%, 9≤10≤Nd/(Pr or Ce or La)≤2, and (Cu+Co+Al)/M≥ 0.9; and
grain boundary (c) meets the following conditions: 25wt%≤R≤50wt% or R≥60%, 0≤M≤10wt%,
where R in the grain boundaries (a) to (c) refers to the total amount of rare earths, and M refers to the total amount of Al, Cu, Ga, Ti, Co, Mg, Zn, Nb, Mo, and Sn.

2. The method of claim 1, wherein covering the diffusion source on the NdFeB magnet is performed by one of magnetron sputtering coating, vapor deposition coating, slurry coating, and sticking powder coating.

3. The method of claim 1, wherein the chemical composition of the non-heavy rare earth NdFeB magnet intermediate fulfils one or more of the following conditions:
• when R1 includes Nd and Pr, their weight ratio is 0.03≤Pr/Nd≤0.6;
• when R2 includes La and Sm, their weight ratio is 0.5≤La/Sm≤2;
• when M includes Cu and Al, their weight ratio is 0≤Cu/Al≤6.5;
• when M includes Cu and Ga, their weight ratio is 0≤Cu/Ga≤5; and
• when M includes Mg and Al, their weight ratio is 0≤Mg/Al≤6.

4. The method of claim 1, wherein the chemical composition of the non-heavy rare earth NdFeB magnet intermediate fulfils one or more of the following conditions:
• when R1 includes Nd and Pr, and 0.03≤Pr/Nd≤0.4;
• when R2 includes La and Sm, their weight ratio is 0.5≤La/Sm≤2;
• when M includes Cu and Al, their weight ratio is 0≤Cu/Al≤6.5;
• when M includes Cu and Ga, their weight ratio is 0≤Cu/Ga≤5; and
• when M includes Mg and Al, their weight ratio is 0≤Mg/Al≤6.

5. The method of any one of the preceding claims, wherein the NdFeB magnet is cooled down by argon gas passing through a tube-fin type annular exchanger.

## Patentansprüche

1. Herstellungsverfahren für einen NdFeB-Permanentmagneten vom Sintertyp, wobei das Verfahren die folgenden Schritte umfasst:
(1) Überziehen eines NdFeB-Magneten mit einer Diffusionsquelle, um ein NdFeB-Magnet-Zwischenprodukt auszubilden, wobei das NdFeB-Magnet-Zwischenprodukt ein NdFeB-Magnet-Zwischenprodukt vom Typ leichter Seltener Erden oder ein NdFeB-Magnet-Zwischenprodukt vom Typ schwerer Seltener Erden ist,
wobei die chemische Zusammensetzung des NdFeB-Magnet-Zwischenprodukts mit leichten Seltenen Erden [R1ₓR2₁₋ₓ]ₐM_{b}B_{c}Fe_{100-a-b-c} entspricht, wobei
0,94 ≤ x ≤ 1, 32 ≤ a ≤ 37, 1,5 ≤ b ≤ 7 und 0,9 ≤ c ≤ 1,2,
R1 eines oder mehrere von Nd, Pr und Ce ist,
R2 eines oder zwei von La und Sm ist, und
M eines oder mehrere von Al, Cu, Ga, Ti, Co, Mg, Zn und Sn ist; und
wobei die chemische Zusammensetzung des NdFeB-Magnet-Zwischenprodukts vom Typ schwerer Seltener Erden [R1ₓR3_{y}R2_{1-x-y}]ₐM_{b}B_{c}Fe_{100-a-b-c} entspricht, wobei
32,5 ≤ a ≤ 38, 0,8 ≤ x ≤ 0,98, 0,003 ≤ y ≤ 0,3, 1,5 ≤ b ≤ 7 und 0,9 ≤ c ≤ 1,2,
R1 eines oder mehrere von Nd, Pr und Ce ist,
R2 eines oder zwei von La und Sm ist,
R3 eines oder mehrere von Tb, Dy und Ho ist, und
M eines oder mehrere von Al, Cu, Ga, Ti, Co, Mg, Zn und Sn ist, und
wobei sich die Diffusionsquelle auf eine Legierung, die zwei oder mehr von den Legierungselementen Nd, Pr, Ce, La, Ho, Tb, Dy, Ga, Al, Cu und Mg umfasst, bezieht;
(2) Legen des NdFeB-Magnet-Zwischenprodukts in einen Ofen und Durchführen einer Diffusionsbehandlung und anschließend einer Alterungsbehandlung, wobei die Alterungsbehandlung in einen Erwärmungsschritt und einen Abkühlungsschritt aufgeteilt ist, und
wobei der Abkühlungsschritt mittels Argongas-Überdruck-Umlaufkühlung durchgeführt wird,
ein Druck des zur Argongas-Überdruck-Umlaufkühlung verwendeten Argongases im Bereich von 1 bar bis 5 bar liegt,
die Temperatur für die Diffusionsbehandlung des NdFeB-Magneten über 6 h bis 20 h im Bereich von 850 °C bis 920 °C liegt, und
die Temperatur für die Alterungsbehandlung über 3 h bis 10 h im Bereich von 420 °C bis 680 °C liegt, derart, dass NdFeB-Magneten mit einer Dicke der Korngrenzen im Bereich von 10 nm bis 1 µm ausgebildet werden, und eine Struktur der Korngrenzen eine Hauptphase, Korngrenze (a), Korngrenze (b) und Korngrenze (c) umfasst,
wobei Korngrenze (a) die folgenden Bedingungen erfüllt: R ≥ 55 Gew.-% oder 35 Gew.-% ≤ R ≤ 40 Gew.-%, 10 Gew.-% ≤ M ≤ 28 Gew.-%, wobei 3:1 ≤ Nd/(Pr oder Ce oder La) ≤ 2:1, und (Cu + Al + Ga)/M ≥ 0,8;
Korngrenze (b) die folgenden Bedingungen erfüllt: 40 Gew.-% ≤ R ≤ 55 Gew.-%, 10 Gew.-% < M < 20 Gew.-%, 9:10 ≤ Nd/(Pr oder Ce oder La) ≤ 2, und (Cu + Co + Al)/M ≥ 0,9; und
Korngrenze (c) die folgenden Bedingungen erfüllt: 25 Gew.-% ≤ R ≤ 50 Gew.-% oder R ≥ 60 %, 0 ≤ M ≤ 10 Gew.-%,
wobei sich R in den Korngrenzen (a) bis (c) auf die Gesamtmenge von Seltenen Erden bezieht, und sich M auf die Gesamtmenge von Al, Cu, Ga, Ti, Co, Mg, Zn, Nb, Mo und Sn bezieht.

2. Verfahren nach Anspruch 1, wobei das Überziehen der Diffusionsquelle auf den NdFeB-Magneten durch eines von Magnetron-Sputterbeschichtung, Aufdampfbeschichtung, Aufschlämmungsbeschichtung und Klebepulverbeschichtung vollzogen wird.

3. Verfahren nach Anspruch 1, wobei die chemische Zusammensetzung des NdFeB-Magnet-Zwischenprodukts mit leichten Seltenen Erden eine oder mehrere der folgenden Bedingungen erfüllt:
• wenn R1 Nd und Pr umfasst, ist ihr Gewichtsverhältnis 0,03 ≤ Pr/Nd ≤ 0,6;
• wenn R2 La und Sm umfasst, ist ihr Gewichtsverhältnis 0,5 ≤ La/Sm ≤ 2;
• wenn M Cu und Al umfasst, istt ihr Gewichtsverhältnis 0 ≤ Cu/Al ≤ 6,5;
• wenn M Cu und Ga umfasst, ist ihr Gewichtsverhältnis 0 ≤ Cu/Ga ≤ 5; und
• wenn M Mg und Al umfasst, ist ihr Gewichtsverhältnis 0 ≤ Mg/Al ≤ 6.

4. Verfahren nach Anspruch 1, wobei die chemische Zusammensetzung des NdFeB-Magnet-Zwischenprodukts mit leichten Seltenen Erden eine oder mehrere der folgenden Bedingungen erfüllt:
• wenn R1 Nd und Pr umfasst, und 0,03 ≤ Pr/Nd ≤ 0,4;
• wenn R2 La und Sm umfasst, ist ihr Gewichtsverhältnis 0,5 ≤ La/Sm ≤ 2;
• wenn M Cu und Al umfasst, ist ihr Gewichtsverhältnis 0 ≤ Cu/Al ≤ 6,5;
• wenn M Cu und Ga umfasst, ist ihr Gewichtsverhältnis 0 ≤ Cu/Ga ≤ 5; und
• wenn M Mg und Al umfasst, ist ihr Gewichtsverhältnis 0 ≤ Mg/Al ≤ 6.

5. Verfahren nach einem der vorangehenden Ansprüche, wobei der NdFeB-Magnet durch Argongas, das einen ringförmigen Austauscher vom Rohrrippentyp durchströmt, heruntergekühlt wird.

## Revendications

1. Procédé de préparation d'un aimant permanent NdFeB de type fritté, le procédé comprenant les étapes de :
(1) recouvrir un aimant NdFeB avec une source de diffusion pour former un intermédiaire d'aimant NdFeB, l'intermédiaire d'aimant NdFeB étant un intermédiaire d'aimant NdFeB de type terres rares légères ou un intermédiaire d'aimant NdFeB de type terres rares lourdes,
la composition chimique de l'intermédiaire d'aimant NdFeB de terres rares légères étant [R1ₓR2₁₋ₓ]ₐM_{b}B_{c}Fe_{100-a-b-c} avec
0,94≤x≤1, 32≤a≤37, 1,5≤b≤7 et 0,9≤c≤1,2,
R1 étant un élément ou plusieurs parmi Nd, Pr et Ce,
R2 étant un ou deux éléments parmi La et Sm, et
M étant un ou plusieurs éléments parmi Al, Cu, Ga, Ti, Co, Mg, Zn et Sn ; et
la composition chimique de l'intermédiaire d'aimant NdFeB de type terres rares lourdes étant [R1ₓR3_{y}R2_{1-x-y}]ₐM_{b}B_{c}Fe_{100-a-b-c} avec
32,5<a<38, 0,8≤x≤0,98, 0,003≤y≤0,3, 1,5≤b≤7 et 0, 9≤c≤1, 2,
R1 étant un élément ou plusieurs parmi Nd, Pr et Ce,
R2 étant un ou deux éléments parmi La et Sm,
R3 étant un ou plusieurs éléments parmi Tb, Dy et Ho, et
M étant un ou plusieurs éléments parmi Al, Cu, Ga, Ti, Co, Mg, Zn et Sn, et
la source de diffusion se rapportant à un alliage comprenant deux ou plusieurs éléments parmi les éléments d'alliage Nd, Pr, Ce, La, Ho, Tb, Dy, Ga, Al, Cu et Mg ;
(2) placer l'intermédiaire d'aimant NdFeB dans un four et effectuer un traitement de diffusion et ensuite un traitement de vieillissement, le traitement de vieillissement étant divisé en une étape de chauffage et une étape de refroidissement, et
l'étape de refroidissement étant effectuée au moyen de refroidissement par circulation à pression positive de gaz argon,
une pression du gaz argon utilisé pour le refroidissement par circulation à pression positive de gaz argon étant située dans la plage de 1 bar à 5 bars,
la température pour le traitement de diffusion de l'aimant NdFeB étant située dans la plage de 850 °C à 920 °C de 6 h à 20 h, et
la température pour le traitement de vieillissement étant située dans la plage de 420 °C à 680 °C de 3 h à 10 h de telle sorte que des aimants NdFeB avec une épaisseur de joints de grains dans la plage de 10 nm à 1 µm sont formés, et une structure des joints de grains comprenant une phase principale, un joint de grain (a), un joint de grain (b) et un joint de grain (c),
le joint de grain (a) satisfaisant aux conditions suivantes : R≥55 % en poids ou 35 % en poids≤R≤40 % en poids, 10 % en poids≤M≤28 % en poids, avec 3:1≤Nd/(Pr ou Ce ou La) ≤2:1, et (Cu+Al+Ga)/M≥0,8 ;
le joint de grain (b) satisfaisant aux conditions suivantes : 40 % en poids≤R≤55 % en poids, 10 % en poids≤M≤20 % en poids, 9:10≤Nd/(Pr ou Ce ou La)≤2, et (Cu+Co+Al)/M≥0,9 ; et
le joint de grain (c) satisfaisant aux conditions suivantes : 25 % en poids≤R≤50 % en poids ou R≥60 %, 0≤M≤10 % en poids,
R, dans les joints de grains (a) à (c), se rapportant à la quantité totale de terres rares, et M se rapportant à la quantité totale d'Al, de Cu, de Ga, de Ti, de Co, de Mg, de Zn, de Nb, de Mo et de Sn.

2. Procédé selon la revendication 1, recouvrir la source de diffusion sur l'aimant NdFeB étant effectué par un procédé parmi le revêtement par pulvérisation magnétron, le revêtement par dépôt en phase vapeur, le revêtement de suspension et le revêtement de poudre adhésive.

3. Procédé selon la revendication 1, la composition chimique de l'intermédiaire d'aimant NdFeB de terres rares légères remplissant une ou plusieurs des conditions suivantes :
• lorsque R1 comprend Nd et Pr, leur rapport de poids est 0,03≤Pr/Nd≤0,6 ;
• lorsque R2 comprend La et Sm, leur rapport de poids est 0,5≤La/Sm≤2 ;
• lorsque M comprend Cu et Al, leur rapport de poids est 0≤Cu/Al≤6,5 ;
• lorsque M comprend Cu et Ga, leur rapport de poids est 0≤Cu/Ga≤5 ; et
• lorsque M comprend Mg et Al, leur rapport de poids est 0≤Mg/Al≤6.

4. Procédé selon la revendication 1, la composition chimique de l'intermédiaire d'aimant NdFeB de terres rares légères remplissant une ou plusieurs des conditions suivantes :
• lorsque R1 comprend Nd et Pr, et 0,03≤Pr/Nd≤0,4 ;
• lorsque R2 comprend La et Sm, leur rapport de poids est 0,5≤La/Sm≤2 ;
• lorsque M comprend Cu et Al, leur rapport de poids est 0≤Cu/Al ≤6,5 ;
• lorsque M comprend Cu et Ga, leur rapport de poids est 0≤Cu/Ga≤5 ; et
• lorsque M comprend Mg et Al, leur rapport de poids est 0≤Mg/Al≤6.

5. Procédé selon l'une quelconque des revendications précédentes, l'aimant NdFeB étant refroidi par du gaz argon passant par un échangeur annulaire de type tube à ailettes.
